# EUROPEAN PATENT APPLICATION

(11) **EP 2 706 601 A1**
(43) Date of publication of application: **12.03.2014**
(21) Application number: 11864696.7
(22) Date of filing: 02.05.2011
(51) Int. Cl.: H01M 8/04

(54) **FUEL CELL SYSTEM**

(71) Applicant: Toyota Jidosha Kabushiki Kaisha, Toyota-shi, Aichi-ken, 471-8571 (JP)
(72) Inventor: IMANISHI, Hiroyuki, Aichi - ken , 471-8571 (JP); MANABE, Kota, Aichi - ken , 471-8571 (JP)
(74) Representative: Kuhnen & Wacker
(86) International application number: PCT/JP2011/060537
(87) International publication number: WO 2012/150630

(57) **Abstract**

Provided is a fuel cell system that can be driven as much as possible even when abnormality occurs.

The fuel cell system 11 includes: a fuel cell 12 that generates electricity through an electrochemical reaction of fuel gas and oxidation gas; a battery 21 that stores electricity or supplies electricity; and a driving motor 13 that receives electricity for driving. The fuel cell system further includes: a fuel cell electricity supplying path A provided between the fuel cell 12 and the driving motor 13; a battery electricity supplying path B extending from the battery 21 and connected to the fuel cell electricity supplying path A; and a circuit breaker 15 that is provided closer to the fuel cell 12 than a connecting point C of the fuel cell electricity supplying path A and the battery electricity supplying path B.

## Description

### Technical Field

The present invention relates to a fuel cell system provided with a fuel cell.

### Background Art

Electricity is supplied in hybrid cars and electric cars, for example, from a battery provided in the vehicle to its electric motor via a step-up converter circuit, an inverter circuit or the like. Such a known vehicle including an electric motor is provided with a breaker on a power supply path, and the breaker is made up of a breaking element that interrupts current if the current flowing exceeds a breaking current value (see Patent Document 1, for example).

### Citation List

### Patent Document

Patent Document 1: Japanese Patent Application Laid-Open No. 2007-68336

### Disclosure of the Invention

### Problem to be Solved by the Invention

A fuel cell system including a fuel cell as an energy source that generates electricity through an electrochemical reaction of reactant gases (fuel gas and oxidation gas) typically includes two electricity supply sources of the fuel cell and a battery. Such a fuel cell system including a breaker disposed between an inverter circuit and an electric motor may fail to supply electricity to the electric motor when the breaker interrupts the circuit due to abnormalities in the fuel cell or the battery, and in such a case it is difficult for the vehicle to move to a turnout under its own power.

In view of the aforementioned circumstance, it is an object of the present invention to provide a fuel cell system that can be driven as much as possible even when abnormality occurs.

### Means for Solving the Problem

In order to fulfill the object, a fuel cell system of the present invention includes: a fuel cell that generates electricity through an electrochemical reaction of fuel gas and oxidation gas; a battery that stores electricity or supplies electricity; and a driving source that receives electricity for driving. The fuel cell system further includes: a fuel cell electricity supplying path provided between the fuel cell and the driving source; a battery electricity supplying path extending from the battery and connected to the fuel cell electricity supplying path; and a circuit breaker that is provided closer to the fuel cell or to the battery than a connecting point of the fuel cell electricity supplying path and the battery electricity supplying path.

According to the thus configured fuel cell system, when the circuit breaker operates due to abnormality in the system to interrupt the circuit, electricity will not be supplied from the fuel cell or the battery to the driving source. In such a case, however, electricity can be supplied to the driving source from any one of the battery and the fuel cell, and so the vehicle including the fuel cell system thereon can move to a turnout or the like by the driving source under its own power.

In the fuel cell system of the present invention, the circuit breaker may operate during overloading or short-circuit to interrupt a circuit.

The fuel cell system of the present invention may include at least one of a first converter that boosts electricity generated by the fuel cell and a second converter that boosts electricity discharged from the battery. When the first converter is provided on the fuel cell electricity supplying path, the circuit breaker may be provided downstream of the first converter.

The fuel cell system of the present invention may include at least one of a first converter that boosts electricity generated by the fuel cell and a second converter that boosts electricity discharged from the battery. When the first converter is provided on the fuel cell electricity supplying path, the circuit breaker may be provided upstream of the first converter.

Another fuel cell system of the present invention includes: a fuel cell that generates electricity through an electrochemical reaction of fuel gas and oxidation gas; and a driving source that receives electricity for driving. The fuel cell system further includes: a fuel cell electricity supplying path provided between the fuel cell and the driving source; and a circuit breaker provided on the fuel cell electricity supplying path. The circuit breaker may operate during overloading or short-circuit to interrupt a circuit.

### Effect of the Invention

The fuel cell system of the present invention can be driven as much as possible even when abnormality occurs.

### Brief Description of the Drawings

Fig. 1 is a schematic circuit diagram of a fuel cell system according to one embodiment of the present invention.
Fig. 2 is a side view of a circuit breaker provided in the fuel cell system.
Fig. 3 is a side view to describe the operation of the circuit breaker.
Fig. 4 is another side view to describe the operation of the circuit breaker.
Fig. 5 is a graph showing a melting property of a melting fuse.
Fig. 6 is a graph showing an operation property of an electromagnetic circuit breaker.
Fig. 7 is a schematic circuit diagram of a fuel cell system according to a first modification example.
Fig. 8 is a schematic circuit diagram of a fuel cell system according to a second modification example.
Fig. 9 is a schematic circuit diagram of a fuel cell system according to a third modification example.
Fig. 10 is a schematic circuit diagram of a fuel cell system according to a fourth modification example.

### Reference Signs List

- 11: Fuel cell system
- 12: Fuel cell
- 13: Driving motor (driving source)
- 15: Circuit breaker
- 21: Battery
- A: Fuel cell electricity supplying path
- B: Battery electricity supplying path
- C: Connecting point

### Mode for Carrying out the Invention

The following describes one embodiment of a fuel cell system according to the present invention, with reference to the drawings. The present embodiment describes a fuel cell system according to the present invention as a vehicle-mounted electric generation system for a fuel cell hybrid vehicle (FCHV).

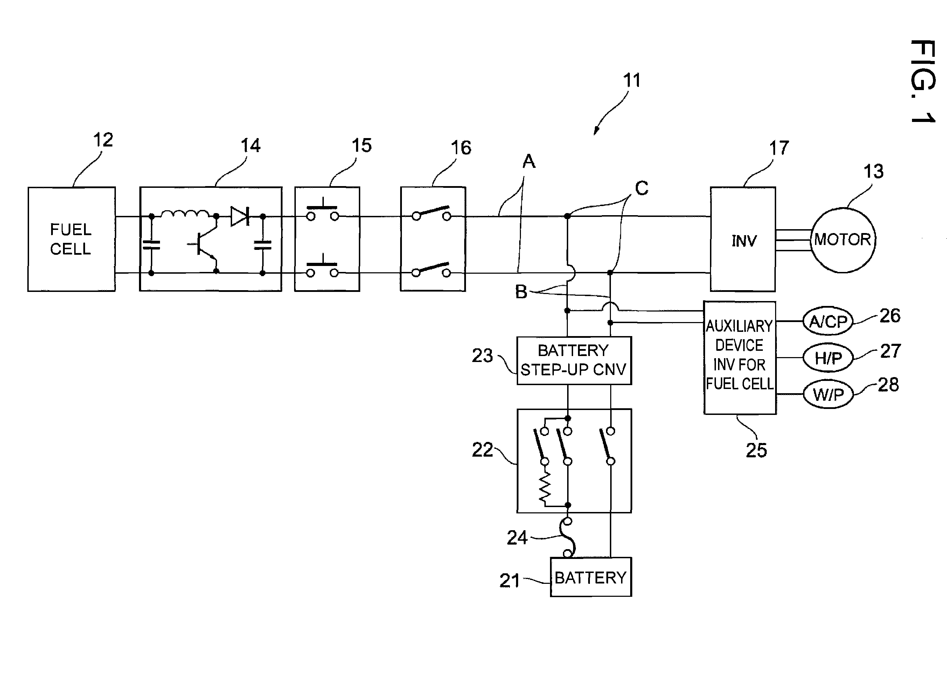

Referring to Fig. 1, the following describes the configuration of a fuel cell system in the present embodiment. Fig. 1 schematically shows the configuration of a fuel cell system in the present embodiment.

As shown in Fig. 1, a fuel cell system 11 includes a fuel cell 12 that generates electricity through an electrochemical reaction of fuel gas and oxidation gas as reactant gases.

The fuel cell 12 may be a polymer electrolyte fuel cell, for example, which has a stack structure including the lamination of a large number of single cells. A single cell has an air electrode at one face of electrolyte made up of an ion exchange film and a fuel electrode at the other face, and further has a pair of separators so as to sandwich the air electrode and the fuel electrode from the both sides. In this case, hydrogen gas is supplied to a hydrogen gas passage of one of the separators and air as oxidation gas is supplied to an oxidation gas passage of the other separator, and these reactant gases react chemically to generate electricity.

This fuel cell 12 is connected to a driving motor 13 to let a vehicle travel, and supplies electricity to the driving motor 13.

To a fuel cell electricity supplying path A from the fuel cell 12 to the driving motor 13, a FC step-up converter (first converter) 14, a circuit breaker 15, a relay 16 and a driving inverter 17 are connected in this order from the fuel cell 12 side. The disposing order of the circuit breaker 15 and the relay 16 may be reversed.

In this way, the fuel cell system 11 is configured so that electricity generated at the fuel cell 12 is boosted by the FC step-up converter 14 and the resultant electricity is then supplied to the driving motor 13 via the driving inverter 17.

The driving motor 13 may be a three-phase AC motor, and the driving inverter 17 connected to the driving motor 13 converts DC current into three-phase AC current and supplies the current to the driving motor 13.

The fuel cell system 11 further includes a battery 21 that supplies electricity to the driving motor 13. To a battery electricity supplying path B from the battery 21 to the driving motor 13, a relay 22 and a battery step-up converter (second converter) 23 are connected in this order from the battery 21 side.

Such a battery electricity supplying path B of the battery 21 is connected between the relay 16 and the driving inverter 17 of the fuel cell electricity supplying path A of the fuel cell 12, and so electricity from the battery 21 can be supplied to the driving motor 13 via a connecting point C of the fuel cell electricity supplying path A and the battery electricity supplying path B.

Thus the circuit breaker 15 is disposed closer to the fuel cell 12 than the connecting point C of the fuel cell electricity supplying path A and the battery electricity supplying path B.

Herein, a fuse 24 is provided between the battery 21 and the relay 22 in the battery electricity supplying path B.

The battery step-up converter 23 is a DC voltage converter, and has a function of regulating DC voltage input from the battery 21 and outputting the same to the driving motor 13 side (boosting discharged electricity of the battery 21 for outputting) and a function of regulating DC voltage input from the fuel cell 12 or the driving motor 13 and outputting the same to the battery 21. Such functions of the battery step-up converter 23 yield charge/discharge of the battery 21. The battery step-up converter 23 further controls the output voltage of the fuel cell 12.

The battery 21 can charge with surplus electricity or supply electricity in an auxiliary manner in accordance with a control signal from a not-illustrated controller.

The fuel cell system 11 further includes an inverter 25 for auxiliary devices, and the inverter 25 is connected between the battery step-up converter 23 of the battery electricity supplying path B and the connecting point C. To the inverter 25, auxiliary devices such as an air compressor 26, a hydrogen pump 27 and a cooling water pump 28 are connected, and these auxiliary devices can be driven by electricity supplied from the inverter 25.

The following describes the circuit breaker 15 provided in the fuel cell electricity supplying path A.

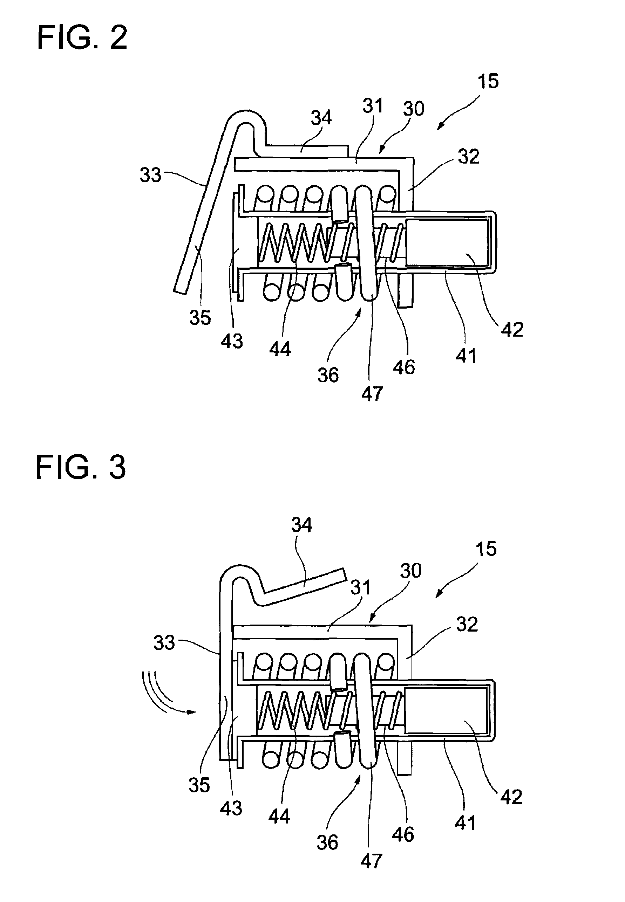

As shown in Fig. 2, the circuit breaker 15 includes a frame 30 formed in a L-letter shape viewed from the side face, and the frame 30 has an iron supporting part 31 and a plunger supporting part 32. The iron supporting part 31 of the frame 30 supports a movable iron piece 33 swingably, and the movable iron piece 33 has a contact part 34 and a magnetic chuck 35. When the contact part 34 of the movable iron piece 33 is in contact with the iron supporting part 31 of the frame 30, the circuit of the fuel cell electricity supplying path A to supply electricity from the fuel cell 12 to the driving motor 13 is closed.

The plunger supporting part 32 of the frame 30 supports a plunger mechanism 36. The plunger mechanism 36 includes a supporting cylinder 41 formed in a bottomed cylindrical shape so that a plunger 42 formed in a cylindrical shape is placed slidably in the supporting cylinder 41. The supporting cylinder 41 is provided with an electromagnetic pole member 43 on its opening side, and the electromagnetic pole member 43 blocks the opening of the supporting cylinder 41. In the supporting cylinder 41, a coil spring 44 is provided between the plunger 42 and the electromagnetic pole member 43, and elastic force of the coil spring 44 biases the plunger 42 towards the bottom of the supporting cylinder 41. The plunger 42 is formed with a supporting pin part 46 that protrudes towards the coil spring 44, where the supporting pin part 46 is inserted into the coil spring 44. The plunger mechanism 36 is further provided with a coil 47 to surround the supporting cylinder 41, and current supplied from the fuel cell 12 to the driving motor 13 flows through the coil 47.

If short-circuit occurs in the fuel cell system 11 provided with such a circuit breaker 15 due to some abnormality and large short-circuit current flows through the fuel cell electricity supplying path A, the large current flows through the coil 47 of the circuit breaker 15 as well in the fuel cell electricity supplying path A. Then, as shown in Fig. 3, the plunger mechanism 36 of the circuit breaker 15 generates a large magnetic force by the coil 47, and the magnetic chuck 35 of the movable iron piece 33 is sucked by the electromagnetic pole member 43 by this magnetic force. This rotates the movable iron piece 33 so as to move the contact part 34 of the movable iron piece 33 away from the iron supporting part 31 of the frame 30, so that the circuit of the fuel cell electricity supplying path A to supply electricity from the fuel cell 12 to the driving motor 13 is opened. Thereby, supplying of abnormal large current to the driving motor 13 can be interrupted.

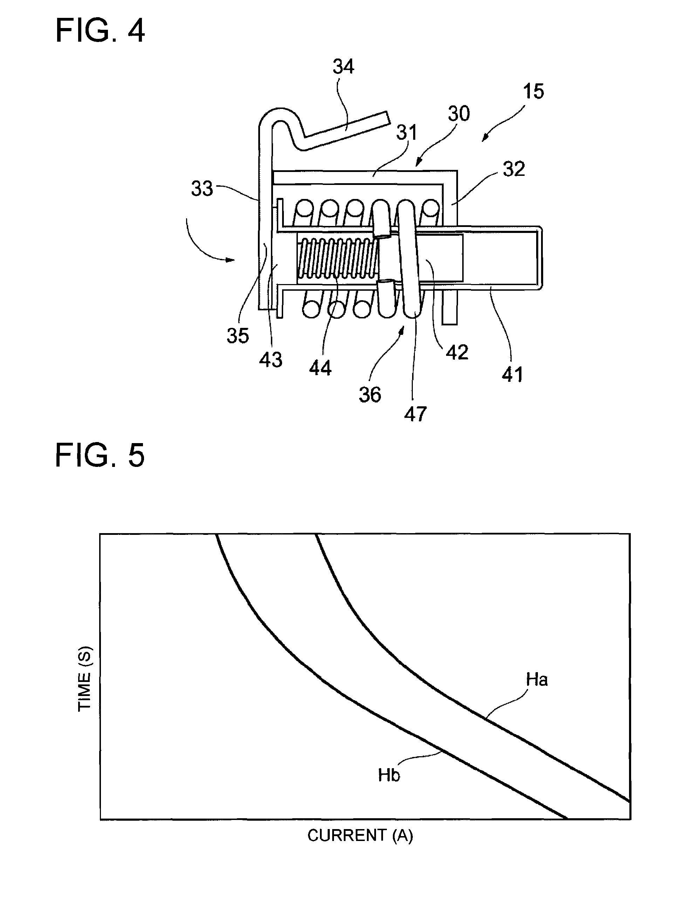

When the fuel cell system 11 is overloaded due to a certain factor, overcurrent that is larger than that in the normal operation state (e.g., 20% increasing than the maximum current in the normal operation state) flows through the fuel cell electricity supplying path A, and such overcurrent flows through the coil 47 of the circuit breaker 15 as well. Then, as shown in Fig. 4, the plunger mechanism 36 of the circuit breaker 15 generates a magnetic force by the coil 47. Herein, the magnetic force generated by the overcurrent flowing through the coil 47 does not cause the suction of the magnetic chuck 35 of the movable iron piece 33 by the electromagnetic pole member 43. However, if such an overload state continues and the overcurrent continues to flow through the coil 47, the plunger 42 is pulled into the coil 47 by a magnetic force generated as shown in Fig. 4, whereby a large magnetic force is generated at the plunger mechanism 36. Then, the magnetic chuck 35 of the movable iron piece 33 is sucked by the electromagnetic pole member 43 by this large magnetic force. This rotates the movable iron piece 33 so as to move the contact part 34 of the movable iron piece 33 away from the iron supporting part 31 of the frame 30, so that the circuit of the fuel cell electricity supplying path A to supply electricity from the fuel cell 12 to the driving motor 13 is opened. Thereby, supplying of abnormal large current to the driving motor 13 can be interrupted.

In this way, the overloaded state of the fuel cell system 11 is controlled so that, when the overloading is temporal such that the overloading does not cause any problem in the fuel cell system 11, interruption of the fuel cell electricity supplying path A is suppressed, and when the overloading is abnormal such that the overloading continues for a certain period of time or longer, the fuel cell electricity supplying path A is interrupted.

When the circuit breaker 15 operates so as to interrupt the fuel cell electricity supplying path A, then electricity is no longer supplied from the fuel cell 12 to the driving motor 13.

In such a case, however, the fuel cell system 11 according to the present embodiment is configured so that electricity from the battery 21 can be supplied to the driving motor 13 via the battery electricity supplying path B.

Thereby, the driving motor 13 can receive electricity from the battery 21 for driving, and the vehicle including this fuel cell system 11 thereon can move to a turnout or the like under its own power.

Instead of the electromagnetic circuit breaker 15, a melting fuse may be provided. Considering the on-board environment such as an ambient temperature higher than a room temperature, however, the fuel cell system 11 including a large-capacity battery 21 needs a large capacity of fuse, meaning a large-size fuse that occupies the space.

Fig. 5 shows a melting property of a melting fuse. As shown in Fig. 5, a melting fuse shows a gentle curve indicating the relationship of time to melt and current. This means that a fuse having such a melting property, which is large in size and has a large capacity (that shown with Ha in Fig. 5), needs considerable time to melt and interrupt the circuit. When a small-capacity fuse is used to shorten the time to melt for interruption (that shown with Hb in Fig. 5), such a fuse will melt by heat generated by rated current as well and so the circuit may be unfortunately interrupted.

In this way, a melting fuse has to be controlled for a physical property of metal, and has difficulty in implementing the function of disconnecting the circuit quickly in response to the generation of short-circuit or overloading while avoiding melting by heat generated by rated current. Especially the fuel cell system 11 generates large current, and so it is difficult for a melting fuse to implement both of a current-carrying function and an interruption function.

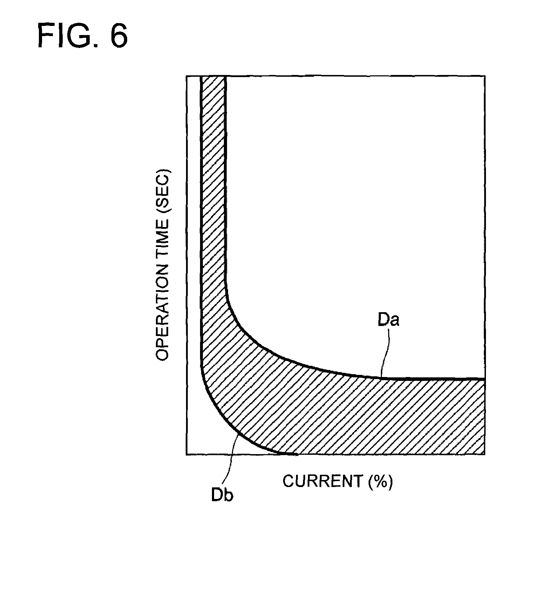

Fig. 6 shows an operation property of an electromagnetic circuit breaker. As shown in Fig. 6, an electromagnetic circuit breaker can have a rapidly changing curve indicating the relationship of time to melt and current. This means that a circuit breaker having such an operation property, regardless whether it has a large capacity (that shown with Da in Fig. 6) or a relatively small capacity (that shown with Db in Fig. 6), interrupts the circuit instantly when current necessary for the operation flows. That is, such a circuit breaker allows the circuit to be kept closed when rated current flows and to be interrupted smoothly when short-circuit occurs or overloading continues due to some abnormality.

The fuel cell system 11 according to the present embodiment includes such an electromagnetic circuit breaker 15, and so allows the fuel cell electricity supplying path A to be interrupted smoothly only when the fuel cell system 11 generates short-circuit or is in an overloading state.

The fuel cell system 11 according to the present embodiment includes the circuit breaker 15 that is disposed on the side of the driving motor 13 via the FC step-up converter 14 with reference to the fuel cell 12. The circuit breaker 15 disposed at such a place can boost electricity of large current output from the fuel cell 12 by the FC step-up converter 14 and so can decrease the value of the current. This means that, as compared with the configuration including the circuit breaker 15 disposed on the side of the fuel cell 12 with reference to the FC step-up converter 14, the circuit breaker 15 can be for smaller current that is smaller in size and at lower cost.

The circuit breaker 15 may be of a type capable of interrupting manually. Such a configuration does not require a service plug, and so the configuration can be simplified and its maintenance can be facilitated.

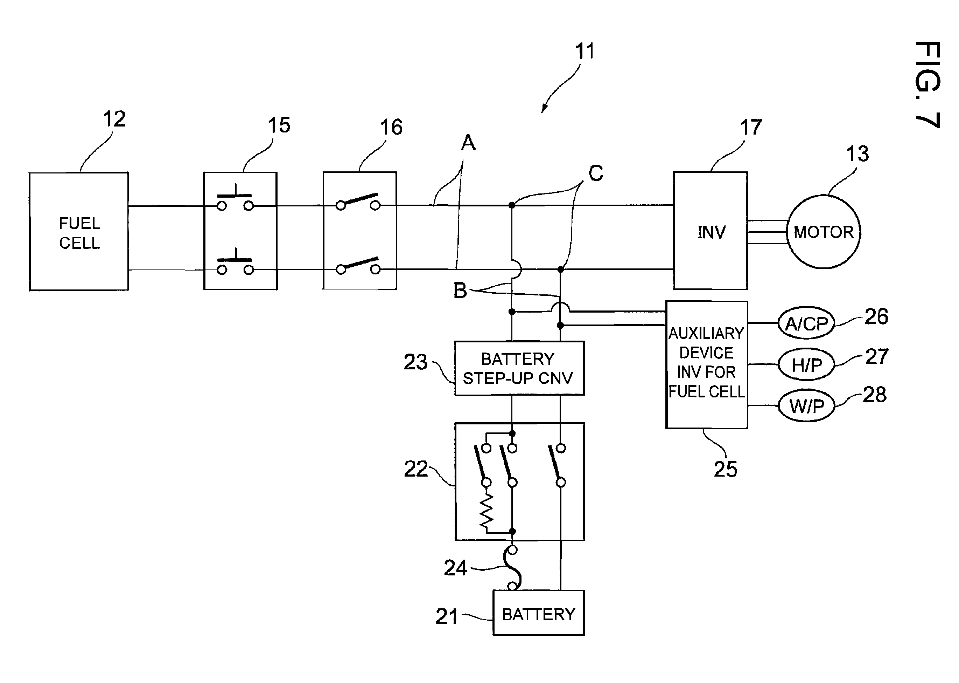

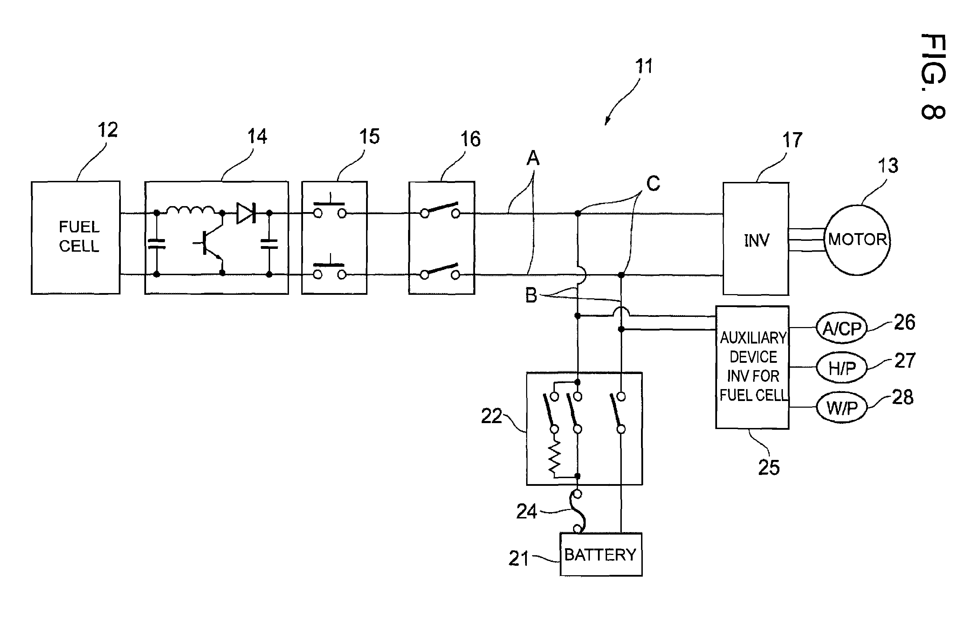

The present embodiment exemplifies the fuel cell system 11 including the FC step-up converter 14 and the battery step-up converter 23 as step-up converters in order to allow voltage of the fuel cell 12 and the battery 21 to be regulated to voltage suitable to various specifications. However, as shown in Fig. 7, the fuel cell system 11 according to the present invention may include the battery step-up converter 23 only, or as shown in Fig. 8, the fuel cell system 11 may include the FC step-up converter 14 only. In these cases also, the circuit breaker 15 is disposed closer to the fuel cell 12 than the connecting point C of the fuel cell electricity supplying path A and the battery electricity supplying path B.

The fuel cell system 11 including the FC step-up converter 14 only may omit the relay 22 and the fuse 24.

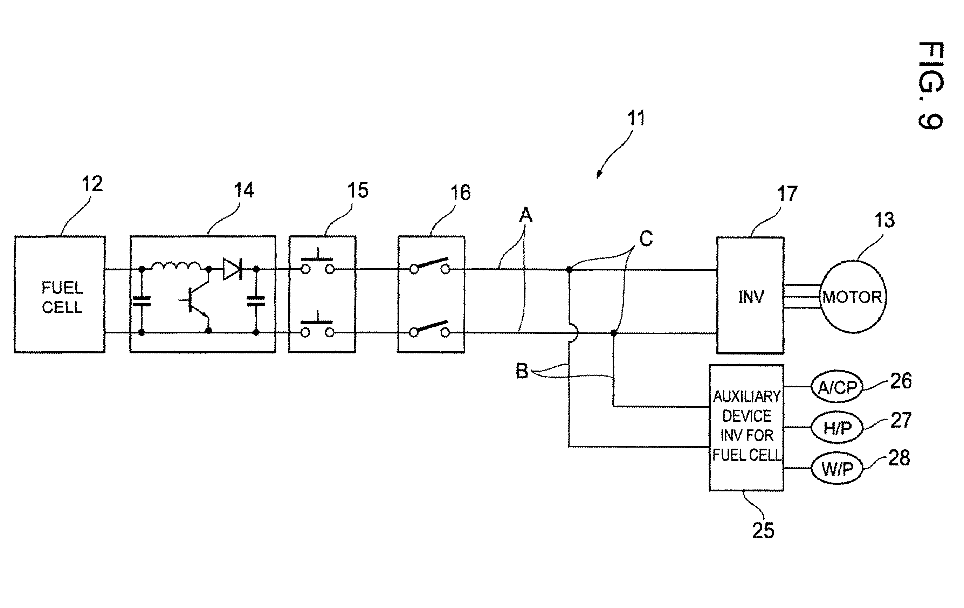

As shown in Fig. 9, the fuel cell system 11 of the present invention may include the fuel cell 12 only as an electricity supply source to the driving motor 13 and the auxiliary devices (the air compressor 26, the hydrogen pump 27, the cooling water pump 28 and the like), and may omit the battery 21, the battery step-up converter 23, the relay 22 and the fuse 24. In this case also, the circuit breaker 15 is disposed closer to the fuel cell 12 than the connecting point C of the fuel cell electricity supplying path A and the battery electricity supplying path B.

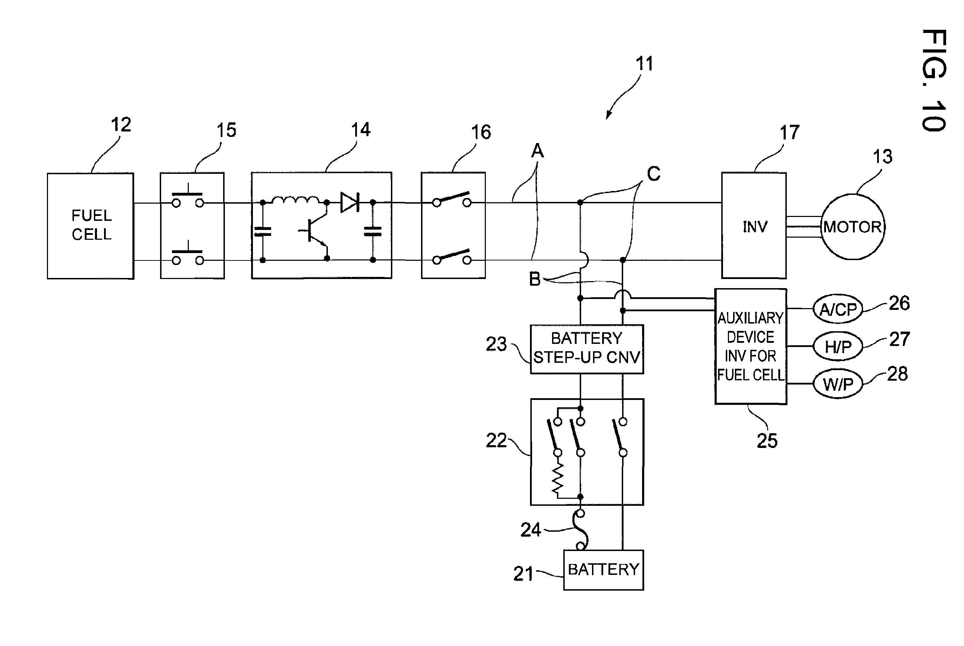

In the embodiment of Fig. 1, the circuit breaker 15 is disposed downstream of the FC step-up converter 14 (on the downstream side in the electricity supplying direction from the fuel cell 12 to the driving motor 13), i.e., is disposed on the opposite side (on the side of the driving motor 13) of the fuel cell 12 with reference to the FC step-up converter 14. Instead, as shown in Fig. 10, the circuit breaker 15 may be disposed upstream of the FC step-up converter 14 (on the upstream side in the electricity supplying direction from the fuel cell 12 to the driving motor 13), i.e., may be disposed on the side of the fuel cell 12 with reference to the FC step-up converter 14.

In the present embodiment, the circuit breaker 15 is disposed on the side of the fuel cell electricity supplying path A. Instead, the circuit breaker 15 may be disposed on the side of the battery electricity supplying path B. In this case, when the circuit breaker 15 operates due to abnormality of the output or overloading on the battery 21 side, electricity from the battery 21 does not supply to the driving motor 13. However, the driving motor 13 receives electricity from the fuel cell 12, and so the driving motor 13 can operate for driving to move the vehicle to a turnout or the like under its own power.

The present embodiment describes in the above the case where the fuel cell system of the present invention is provided in a fuel cell hybrid vehicle, and the fuel cell system of the present invention may be used for various mobile objects (robots, ships, aircraft and the like) other than the fuel cell hybrid vehicle. The fuel cell system of the present invention may be used for stationary electricity generation systems used for power-generating facilities for structures (houses, buildings and the like) as well.

## Claims

1. A fuel cell system, comprising: a fuel cell that generates electricity through an electrochemical reaction of fuel gas and oxidation gas; a battery that stores electricity or supplies electricity; and a driving source that receives electricity for driving, further comprising:
a fuel cell electricity supplying path provided between the fuel cell and the driving source;
a battery electricity supplying path extending from the battery and connected to the fuel cell electricity supplying path; and
a circuit breaker that is provided closer to the fuel cell or to the battery than a connecting point of the fuel cell electricity supplying path and the battery electricity supplying path.

2. The fuel cell system according to claim 1,
wherein the circuit breaker operates during overloading or short-circuit to interrupt a circuit.

3. The fuel cell system according to claim 1 or 2, further comprising:
at least one of a first converter that boosts electricity generated by the fuel cell and a second converter that boosts electricity discharged from the battery, wherein
when the first converter is provided on the fuel cell electricity supplying path, the circuit breaker is provided downstream of the first converter.

4. The fuel cell system according to claim 1 or 2, further comprising:
at least one of a first converter that boosts electricity generated by the fuel cell and a second converter that boosts electricity discharged from the battery, wherein
when the first converter is provided on the fuel cell electricity supplying path, the circuit breaker is provided upstream of the first converter.

5. A fuel cell system, comprising: a fuel cell that generates electricity through an electrochemical reaction of fuel gas and oxidation gas; and a driving source that receives electricity for driving, further comprising:
a fuel cell electricity supplying path provided between the fuel cell and the driving source; and
a circuit breaker provided on the fuel cell electricity supplying path, wherein
the circuit breaker operates during overloading or short-circuit to interrupt a circuit.
